# EUROPEAN PATENT SPECIFICATION

(11) **EP 2 071 808 B1**
(45) Date of publication and mention of the grant of the patent: **23.02.2011**
(21) Application number: 07764280.9
(22) Date of filing: 26.07.2007
(51) Int. Cl.: H04L 29/06, H04L 12/46, H04L 12/56

(54) **METHODS AND A SYSTEM AND DEVICES FOR IPV6 DATAGRAM TRANSMISSION IN THE ETHERNET**
VERFAHREN UND SYSTEM UND EINRICHTUNGEN ZUR IPV6-DATAGRAMM-ÜBERTRAGUNG IM ETHERNET
PROCÉDÉS, SYSTÈME ET DISPOSITIFS DE TRANSMISSION DE DATAGRAMME IPV6 SUR ETHERNET

(30) Priority: 16.09.2006 CN 200610062636
(43) Date of publication of application: 17.06.2009
(73) Proprietor: Huawei Technologies Co., Ltd., Longgang District, Shenzhen Guangdong 518129 (CN)
(72) Inventor: JIANG, Zhangzhen, Shenzhen, Guangdong 518129 (CN)
(74) Representative: Gulde Hengelhaupt Ziebig & Schneider
(86) International application number: PCT/CN2007/070358
(87) International publication number: WO 2008/034365

(56) References cited:
- CN-A- 1 507 206
- CN-A- 1 611 040
- CN-A- 1 953 416
- US-A1- 2003 051 045
- US-A1- 2005 243 818
- US-B1- 6 463 071
- CRAWFORD M.: 'Transmission of IPv6 Packets over Ethernet Networks' NETWORK WORKING GROUP vol. RFC 2464, December 1998, page 2, XP015008248
- CRAWFORD M.: 'A Method for the Transmission of IPv6 Packets over Ethernet Networks' NETWORK WORKING GROUP vol. RFC 1972, August 1996, page 2, XP015007756
- 'IEEE Standard for Information technology - Telecommunications and information exchange between systems-Local and metropolitan area networks-Specific requirements Part 3: Carrier sense multiple access with collision detection (CSMA/CD) access method and....' IEEE STD 802.3 2000, pages 38 - 41

## Description

This application claims priority to Chinese Patent Application No. 200610062636.4, filed with the Chinese Patent Office on September 16, 2006 and entitled "Method, System an Apparatus for Transmitting IPv6 Packet in Ethernet".

### Field of the Invention

The present invention relates to the field of network and information technologies, and in particular to a technology of transmitting an IP packet in an Ethernet.

### Background of the Invention

The existing Internet operates primarily based on the Internet Protocol Version 4 (IPv4). An address length of 32 bits is applied in the IPv4, and there are only about 4.3 billion addresses. Along with the development of the Internet, the limited IP address space defined in the IPv4 is to be exhausted, and the scarcity of the address space will affect further development of the Internet.

Thus the address space has been redefined in the IPv6 to expand the address space. The Internet Protocol Version 6 (IPv6) becomes the next-generation Internet protocol, and was originally proposed due to the scarcity of the IPv4 address space. An address length of 128 bits is applied in the IPv6, which can be considered as a possibility to provide addresses almost unlimitedly. Such an improvement brought by the IPv6 is vividly expressed as "every grain of sand in the world is provided with an IP address". Additionally, the IPv6 has also taken into account other problems which are not well solved in the IPv4. The advantages of the IPv6 include expanding the address space, increasing the entire throughput of the network, improving the Quality of Service (QoS), enhancing network security, supporting plug-and-play and mobility, and implementing better multicast capability, etc. The IPv6 has been commonly accepted as the only substitute of the IPv4. Various domestic and overseas major research institutes and communication device manufacturers have spent a lot of resource on the application and research of the IPv6, and have developed corresponding software and hardware.

As a low-layer network protocol, the Ethernet operates typically at the physical layer and the data link layer of the Open System Interconnect Reference Model (OSI), its initial concept originated from the use of the same medium by two or more users without mutual interference, has advantageous features of a high rate, a low cost, high extensibility, simple and easy maintenance, low installation and update costs and the like, and is the most commonly used network type. From 10M, 100M, Gigabit to 10 Gigabit Ethernet, the development of the Ethernet brings a sharp increase of rate, together with a constantly expanding application area. Respective application requirement in different application areas further facilitate personalized development of Ethernet technologies in these areas, and now the Ethernet has become the mainstream of local area networks, enterprise backbone networks and wide area networks throughout the world.

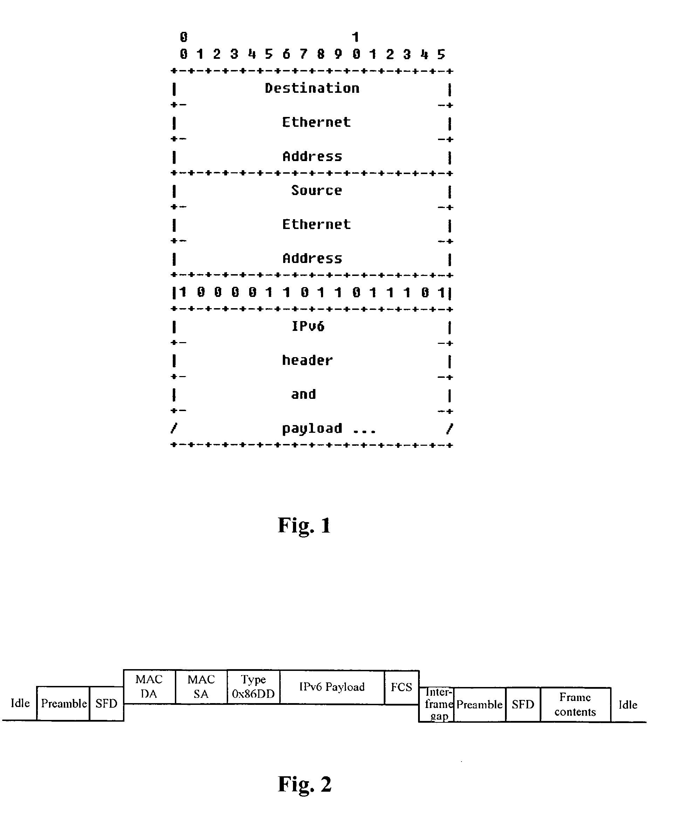

Due to the above reasons, how to transmit an IPv6 packet in an Ethernet, i.e. how to implement the transmission of an IPv6 packet between network devices by using the Ethernet technology, has become an important research direction in the industry. The RFC2464 document proposed by the Internet Engineering Task Force (IETF) defines a method for transmitting an IPv6 packet in an Ethernet by mapping the IPv6 packet into the structure of an Ethernet frame. The structure of the frame after mapping is as illustrated in Fig.1, where information of a source Media Access Control (MAC) address, a destination Media Access Control (MAC) address and the like is also encapsulated in the frame in addition to an IP header and an IP payload.

As defined in the RFC2464, the typical structure of an Ethernet frame is as illustrated in Fig.2, where the Ethernet frame begins with a preamble of 7 bytes, each of which is 10101010, for clock synchronization, so that a receiving end can enable bit synchronization rapidly by a bit pattern of alternating "1" and "0"; then a 1-byte Start Frame Delimiter (SFD) with a field of the 10101011 sequence follows the preamble immediately and indicates the end of the preamble of clock information and the start of the frame; then an 8-byte destination MAC Address (DA) and an 8-byte source MAC address (SA) follow respectively, where the destination MAC address is an MAC address of a receiving device and the source MAC address is an MAC address of a transmitting device; then a 1-byte 0x86DD field follows; then an encapsulated IPv6 payload follows; and finally comes a Frame Check Sequence (FCS) which contains a 4-byte Cyclic Redundancy Code (CRC) which is generated by the transmitting device from the fields before the FCS and after the SFD of the Ethernet frame by using an algorithm, and recalculated by the receiving device to check whether the Ethernet frame is corrupted. Thereafter, the Ethernet frame is encoded at the Ethernet Physical Coding Sub-layer (PCS) and then encapsulated into data transmitted over a physical link.

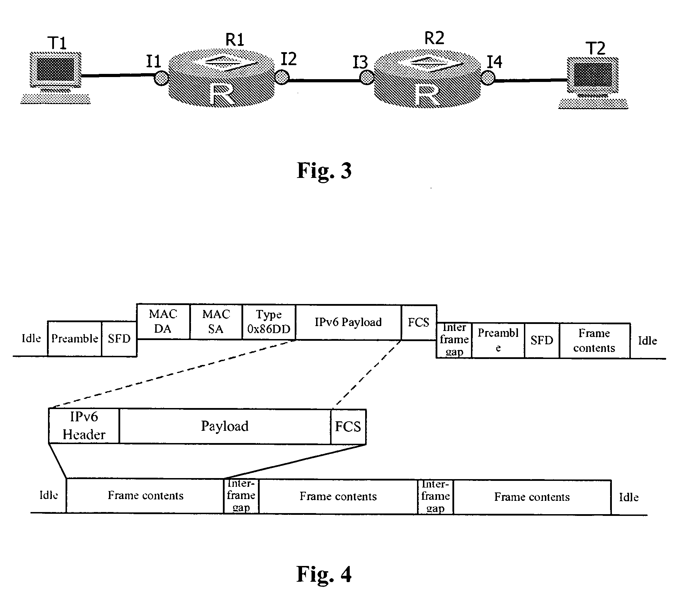

Referring to the network framework illustrated in Fig.3, a terminal T1 is connected with T2 through routers R1 and R2, and I1, I2, I3 and 14 are interfaces of R1 and R2 respectively. Based on the method for transmitting an IPv6 packet in an Ethernet as defined above, when the terminal T1 needs to transmit data to the terminal T2 through router R1 and router R2, a process for transmitting the data includes the following: (1) the R1 receives an Ethernet frame transmitted from the T1 through the Ethernet interface I1; (2) the R1 performs an FCS check, and de-encapsulates the Ethernet frame to obtain an IPv6 packet if no error is detected; (3) the destination IP address of the IPv6 packet is read out, in this example, the destination IP address is the IP address of the T2; (4) the R1 searches its own routing table according to the destination IP address of the IPv6 packet, and finds that the IP address corresponding to the destination IP address is the IP address of the R2; (5) the R1 searches for the Ethernet interface 12 connected with R2 to obtain the MAC address of the 12, and transmits an Address Resolution Protocol (ARP) message to the R2 through the 12 so that the R2 can feedback the MAC address of the corresponding interface 13; (6) according to the MAC address of the interface 12 (as the source MAC address) and the MAC address of the interface 13 (as the destination MAC address), the R1 encapsulates the IPv6 packet obtained in the step (2) to form an Ethernet frame (the Ethernet frame includes the above-described preamble, Start Frame Delimiter SFD, destination MAC address, source MAC address (SA), 0x86DD field, IPv6 payload and Frame Check Sequence, FCS), and transmits the frame to the R2; and (7) the R2 receives through the 13 the Ethernet frame transmitted from the R1, and de-encapsulates the Ethernet frame to obtain the destination MAC address in the Ethernet frame, and the R2 determines whether the destination MAC address is the MAC address of its interface 13, proceeds to obtain the IPv6 packet if the destination MAC address is the MAC address of its interface 13, and rejects the Ethernet frame directly if the destination MAC address is not the MAC address of its interface I3.

As can be seen from the above, the existing solution for transmitting an IPv6 packet in an Ethernet is rather complex, each network element has to undertake burdensome tasks of encapsulation and de-encapsulation, and this problem is much more obvious especially in the case that the transmission of data in the existing network needs to pass through a large number of network elements; and a lot of information in addition to an IPv6 payload also has to be encapsulated into an Ethernet frame, and this also undoubtedly affect the efficiency of bearing valid data.
US 2005/243818 A1 discloses a Router IP port for an IP router of a IP network system, wherein the router IP port comprises: an encapsulating unit for encapsulating IP data packets received from an IP sub-network to generate Ethernet data packets which are forwarded to an Ethernet unit of said IP router; a decapsulating unit for decapsulating Ethernet data packets received from said Ethernet unit to extract IP data packets to be forwarded.
US 2003/051045 A1 discloses methods, apparatus, and articles of manufacture for reducing frame overhead in communications on local area networks. The frame overhead is reduced in communications on local area networks by removing unnecessary addressing information from frames prior to transmission on the network.

### Summary of the Invention

Embodiments of the invention provide a method, system and apparatus for transmitting an IPv6 packet in an Ethernet to reduce the amount of encapsulated and de-encapsulated data.

The invention provides a method for transmitting an IPv6 packet in an Ethernet, including:
encapsulating, at a transmitting end, an IPv6 packet and a Frame Check Sequence to obtain an Ethernet frame, and transmitting the Ethernet frame; and
de-encapsulating, at a receiving end, the received Ethernet frame to obtain the IPv6 packet;
wherein the transmitting end and the receiving end are connected directly;
and wherein the Ethernet frame does not include the source MAC address of the transmitting end and the destination MAC address of the receiving end.

The invention provides a system for transmitting an IPv6 packet in an Ethernet, including:
a first network device including an encapsulating module and a transmitting module, wherein
the encapsulating module is adapted to encapsulate an IPv6 packet and a Frame Check Sequence to form an Ethernet frame, and
the transmitting module is adapted to transmit the Ethernet frame having been encapsulated by the encapsulating module; and
a second network device including a receiving module and a de-encapsulating module, wherein
the receiving module is adapted to receive the Ethernet frame transmitted from the transmitting module, and
the de-encapsulating module is adapted to de-encapsulate the Ethernet frame to obtain the IPv6 packet;
wherein the first network device and the second network device are connected directly;
and wherein the Ethernet frame does not include the source MAC address of the transmitting end and the destination MAC address of the receiving end.

The invention further provides a transmitting apparatus for transmitting an IPv6 packet in an Ethernet, including:
an encapsulating module, adapted to encapsulate an IPv6 packet and a Frame Check Sequence to form an Ethernet frame; and
a transmitting module, adapted to transmit the Ethernet frame having been encapsulated by the encapsulating module;
wherein the transmitting apparatus is directly connected with a receiving apparatus;
wherein the Ethernet frame does not include the source MAC address of the transmitting apparatus and the destination MAC address of the receiving apparatus.

The invention provides a receiving apparatus for transmitting an IPv6 packet in an Ethernet, including:
a receiving module, adapted to receive an Ethernet frame formed by encapsulating an IPv6 packet and a Frame Check Sequence; and
a de-encapsulating module, adapted to de-encapsulate the Ethernet frame received by the receiving module to obtain the IPv6 packet;
wherein the receiving apparatus is directly connected with a transmitting apparatus;
wherein the Ethernet frame does not include the source MAC address of the transmitting apparatus and the destination MAC address of the receiving apparatus.

To sum up, based on the method, system and apparatus for transmitting an IPv6 packet in an Ethernet according to the embodiments of the invention, when encapsulating an IPv6 packet to form an Ethernet frame, only the IPv6 packet and a Frame Check Sequence (FCS), or a preamble, a Start Frame Delimiter SFD, the IPv6 packet and the FCS are encapsulated to form the Ethernet frame. Non-payload information in the Ethernet frame is reduced, the consumption of time and the waste of network device resources resulted from actions for searching for a destination MAC address and the like are avoided, and the simplification of the encapsulating process makes the encapsulating process much quicker. Accordingly, when reading out and de-encapsulating such type of Ethernet frame to obtain the IPv6 packet, the payload efficiency of the Ethernet frame is higher, the reading-out device occupies less resources, and the time for de-encapsulating is shorter. By implementing the invention, the encapsulating process and the de-encapsulating process can be simplified, and the transmission efficiency of data payload can be improved.

### Brief Description of the Drawings

Fig.1 is a schematic diagram of an Ethernet frame structure for transmitting an IPv6 packet in the prior art;

Fig.2 is a schematic diagram of a specific Ethernet frame structure for transmitting an IPv6 packet in the prior art;

Fig.3 is a schematic diagram of a network framework for transmitting an IPv6 packet in an Ethernet according to an embodiment of the present invention;

Fig.4 is a comparative diagram between a frame structure for transmitting an IPv6 packet in an Ethernet according to an embodiment of the present invention and the frame structure in the prior art;

Fig.5 is a schematic diagram of encapsulation at respective layer in the method for transmitting an IPv6 packet in an Ethernet according to an embodiment of the present invention; and

Fig.6 is a schematic diagram of a structure of the system for transmitting an IPv6 packet in an Ethernet according to an embodiment of the present invention.

### Detailed Description of the Embodiments

The essential idea of the method, apparatus and system for transmitting an IPv6 packet in an Ethernet provided by the present invention lies in that: when transmitting an IPv6 packet through an Ethernet, a transmitting party only adds the IPv6 packet and a check field to form an Ethernet frame; and a receiving party can read information of the IPv6 packet rapidly upon receiving the Ethernet frame, so that the encapsulating process and the de-encapsulating process are simplified, time is saved, and the transmission efficiency of data payload is improved.

The method, apparatus and system for transmitting an IPv6 packet in an Ethernet according to the invention are further described in detail hereinafter with reference to the drawings and the embodiments.

In the method for transmitting an IPv6 packet in an Ethernet according to an embodiment of the invention, firstly a first network device encapsulates an IPv6 packet and a Frame Check Sequence FCS to form an Ethernet frame, and transmits the Ethernet frame to a second network device; and then the second network device receives the Ethernet frame, and de-encapsulates the Ethernet frame to obtain the IPv6 packet.

### The First Embodiment

Descriptions are given by still taking the network framework illustrated in Fig.3 as an example. According to the method in the prior art, when transmitting data between the R1 and the R2, the Ethernet frame includes the preamble, the Start Frame Delimiter SFD, the destination MAC address, the source MAC address, the 0x86DD field, the IPv6 payload and the Frame Check Sequence FCS.

However, in this embodiment, because the routers R2 and R1 are actually connected directly, instead of a plurality of routers (or other network elements having MAC addresses) including the R1 being connected with the R2 through a hub, and also instead of a plurality of routers (or other network elements having MAC addresses) including the R2 being connected with the R1 through a hub. Therefore, an Ethernet frame transmitted from the R1 certainly is destined for the R2 (also, an Ethernet frame transmitted from the R2 certainly is destined for the R1), and there is no need for the R2 to determine whether the received Ethernet frame transmitted from the R1 is destined for the R2. Thus, in this embodiment, the Ethernet frame generated by the R1 does not include the source MAC address and the destination MAC address. In the IPv6 protocol, a final destination MAC address has already served as an interface ID to become a part of an IP address.

Descriptions are given still based on the network framework illustrated in Fig.3, and a specific process for transmitting data from the R1 to the R2 is as follows:
Step S101: The R1 receives via the Ethernet interface I1 an Ethernet frame transmitted from the T1;
Step S102: The R1 performs an FCS check, and de-encapsulates the Ethernet frame to obtain an IPv6 packet if no error is detected;
Step S103: The destination IP address of the IPv6 packet is read out, in this embodiment, the destination IP address is the IP address of the T2;
Step S104: The R1 searches its own routing table according to the destination IP address of the IPv6 packet, and finds that the IP address corresponding to the destination IP address is the IP address of the R2;
Step S105: The R1 encapsulates the IPv6 packet obtained in the above step (Step S102) to form an Ethernet frame (the Ethernet frame includes the above-described preamble, Start Frame Delimiter SFD, 0x86DD field, IPv6 payload and Frame Check Sequence, FCS), and transmits the frame to the R2; and
Step S106: The R2 performs an FCS check, and de-encapsulates the Ethernet frame to obtain the IPv6 packet if no error is detected.

As can be seen from the embodiment, the amount of encapsulated and de-encapsulated data is reduced, i.e. the burden on the routers R1 and R2 is reduced. Typically, there are a lot of routers between the two terminals. Meanwhile, there is no need for the R1 to transmit an ARP message to the R2 to obtain the MAC address of the interface T3 of the R2, and the forwarding efficiency is improved. Furthermore, for each Ethernet frame, the amount of data is reduced by 16 bytes, and the bandwidth is increased, especially for the data with a small IP payload. The Frame Check Sequence FCS can be one or more groups. In addition, codes applied by the FCS may include an error detecting code or an error correcting code, for example, an error detecting code of the CRC32 code, and its characteristic is that it only has the function to discover an error; or an error correcting code of the RS code having the function to correct an error, and it can not only discover an error but also has a certain repairing function for an error; also, the FCS can also apply the forward error correcting code to correct a part of error frames, thereby improving the channel reliability. No matter what code is applied, it is sufficient that an error frame can be discriminated.

### The Second Embodiment

This embodiment is similar to the first embodiment in that the source MAC address and the destination MAC address are not encapsulated when generating an Ethernet frame. The difference lies in that the preamble and the Start Frame Delimiter SFD are required to resume clock and delimit frame because there is no coding layer of Physical Coding Sub-layer PCS in the early 10M Ethernet. However, all the existing Ethernet resumes clock and implements delimiting by other approaches. Therefore, in this embodiment, the preamble is not encapsulated. Meanwhile, because the Start Frame Delimiter (SFD) is used to indicate the end of the preamble, in this embodiment, the Start Frame Delimiter (SFD) is not encapsulated in the Ethernet frame either, and only the IP packet and the check code are encapsulated in the Ethernet frame.

Descriptions are given based on the network framework illustrated in Fig.3. In this embodiment, a specific process for transmitting data from the R1 to the R2 is as follows:
Step S201: The R1 receives through the Ethernet interface I1 an Ethernet frame transmitted from the T1;
Step S202: The R1 makes an FCS check, and obtains an IPv6 packet if no error is detected.
Step S203: The destination IP address of the IPv6 packet is read out, in this embodiment, the destination IP address is the IP address of the T2;
Step S204: The R1 searches its own routing table according to the destination IP address of the IPv6 packet, and finds that the IP address corresponding to the destination IP address is the IP address of the R2;
Step S205: The R1 encapsulates the IPv6 packet obtained in the Step S202 to form an Ethernet frame including an IPv6 payload and a check field, and transmits the frame to the R2; and
Step S206: The R2 makes an FCS check, and directly obtains the IPv6 packet (the R2 may directly reads out the IPv6 packet if the R2 has lower-level network elements) if no error is detected.

Referring to Fig.4, it illustrates a comparative diagram between the frame structure for transmitting an IPv6 packet in an Ethernet according to another embodiment of the invention and the frame structure in the prior art. As illustrated in Fig.4, compared with the prior art the preamble, the Start Frame Delimiter (SFD), the source MAC address and the destination MAC address are not encapsulated in an Ethernet frame in this embodiment, and only the IP packet and the check code are encapsulated. The encapsulating process and the de-encapsulating process at the transmitting end and the receiving end are greatly simplified, and the transmission efficiency of data payload is improved.

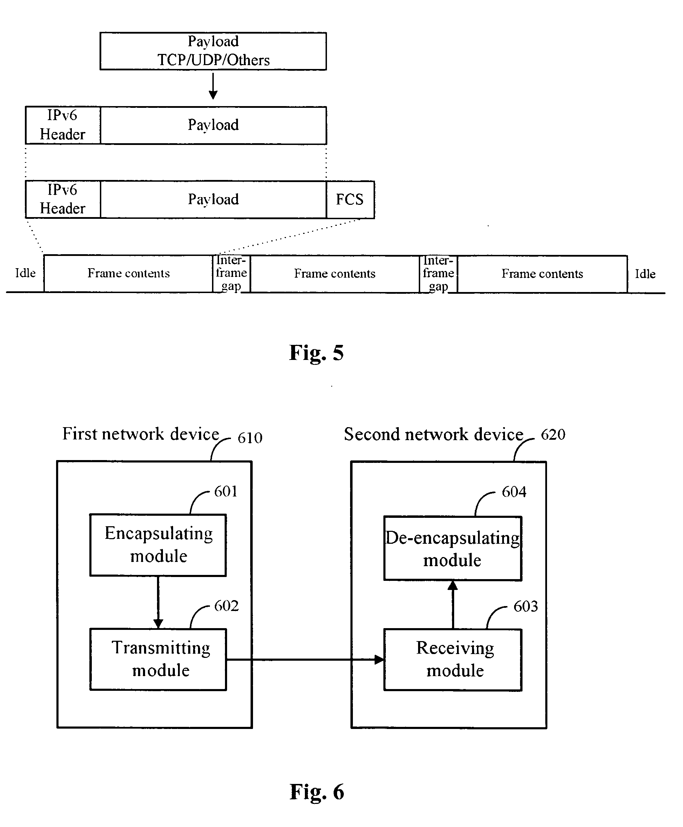

Fig.5 illustrates a schematic diagram of an encapsulating flow at respective layers according to the second embodiment of the invention.

Firstly, a TCP message, a UDP message or another format of message is encapsulated at the IP layer, and an IPv6 packet header is encapsulated to form an IPv6 packet.

A Frame Check Sequence (FCS) is added to the IPv6 packet to form an Ethernet frame.

The Ethernet frame is encoded and mapped to the Physical Coding Sub-layer (PCS) of the physical layer.

Data is transmitted physically through other sub-layers of the physical layer.

Taking a currently predominant VOIP service as an example, a voice data payload of the VOIP is typically only 20 to 40 bytes. However, when encapsulating at respective layers, an RTP header of 12 bytes, an UDP header of 8 bytes, an IPv6 packet header of at least 40 bytes and also an Ethernet frame header have to be added, and a bearing efficiency of data is too low. Here, the data payload is 40 bytes, the RTP header is 12 bytes, the UDP header is 8 bytes, the IPv6 packet header is 40 bytes, and for the Ethernet frame, the preamble is 7 bytes, the SFD is 1 byte, the MAC address is 16 bytes, the type is 2 bytes and the FCS field is 4 bytes, and the total length is 126 bytes. According to this embodiment, if the 7-byte preamble, the 1-byte SFD, the 16-byte MAC address and the 2-byte type of the Ethernet frame are removed, the total length is 104 bytes. If compared with the 126 bytes, (126-104)/104 = 21.2% is saved. The occupancy of bandwidth is greatly reduced, and the embodiment can achieve a better effect for data transmission with a smaller payload, the examples of which are not described here.

The invention further provides a system for transmitting an IPv6 packet in an Ethernet. Referring to Fig.6, the system includes: a first network device 610 including an encapsulating module 601 and a transmitting module 602, where the encapsulating module 601 is adapted to encapsulate an IPv6 packet and a Frame Check Sequence FCS to form an Ethernet frame, and the transmitting module 602 is adapted to transmit the Ethernet frame having been encapsulated by the encapsulating module; and a second network device 620 including a receiving module 603 and a de-encapsulating module 604, where the receiving module 603 is adapted to receive the Ethernet frame transmitted from the transmitting module, and the de-encapsulating module 604 adapted to de-encapsulate the Ethernet frame to obtain the IPv6 packet.

Fig.6 is a schematic diagram of an embodiment of the system for transmitting an IPv6 packet in an Ethernet according to the invention. As illustrated in Fig.6, the system for transmitting an IPv6 packet in an Ethernet includes a first network device 610 and a second network device 620, where the first network device further includes an encapsulating module 610 and a transmitting module 602, and the second network device 620 includes a receiving module 603 and a de-encapsulating module 604.

The encapsulating module 601 is adapted to encapsulate a preamble and a Start Frame Delimiter (SFD), an IPv6 packet and a corresponding Frame Check Sequence (FCS) for frame check or error correcting to form an Ethernet frame. In this embodiment, according to specific requirements, the Ethernet frame may be divided into more than one group, and correspondingly there may be one or more groups of FCS. In addition, codes applied by the FCS may be an error detecting code or an error correcting code, for example, an error detecting code of the CRC32 code, and its characteristic is that it only has the function to discover an error; or an error correcting code of the RS code having the function to correct an error, and it can not only discover an error but also has a certain repairing function for an error; also, the FCS can also apply the forward error correcting code to correct a part of error frames, thereby improving the channel reliability. No matter what code is applied, it is sufficient that an error frame can be discriminated.

The transmitting module 602 connected with the encapsulating module 601 is adapted to transmit the Ethernet frame having been encapsulated. While transmitting, firstly the contents of the Ethernet frame are mapped to the Physical Coding Sub-layer PCS of the physical layer, and then actual physical signal is transmitted through other sub-layers of the physical layer. The encoding and the transmitting approach at the physical layer belong to common technologies in the art, and therefore are not described here.

The receiving module 603 located in the second network device 620 is adapted to receive the Ethernet frame transmitted from the transmitting module 602 of the first network device. It shall be noted that: before receiving of the receiving module 603, processing shall be made at the physical layer of the second network device, the processing approach is reverse to the processing approach at the physical layer of the first network device, so as to recover the Ethernet frame encapsulated by the encapsulating module 601.

The de-encapsulating module 604 is adapted to de-encapsulate the Ethernet frame received by the receiving module 603 to obtain the IPv6 packet. In this embodiment, the de-encapsulating module 601 removes the preamble and the Start Frame Delimiter SFD of the Ethernet frame, checks correctness of the IPv6 packet by the Frame Check Sequence (FCS), and obtains the IPv6 packet after the check. If the FCS is an error correcting code, the IPv6 packet can be recovered to the correct packet even there is a certain error in the IPv6 packet.

Another embodiment of the invention is substantially the same as the first embodiment except that: in the Ethernet frame encapsulated by the encapsulating module 601, only the upper-layer IPv6 packet and the corresponding Frame Check Sequence (FCS) are encapsulated, the preamble and the Start Frame Delimiter (SFD) are not encapsulated. The corresponding de-encapsulating module 604 needs not to remove the preamble and the Start Frame Delimiter (SFD) of the Ethernet frame, the IPv6 packet can be obtained directly after checking by the Frame Check Sequence (FCS). The encapsulating process and the de-encapsulating process are much more simplified, and the Ethernet frame encapsulated in this type of approach carries a larger amount of information.

In this embodiment, the first network device and the second network device are generally network devices having the Layer 2 or Layer 3 functions as defined in the Open System Interconnection (OSI) reference model, for example, switches and routers, etc.

The invention further provides a transceiving apparatus for transmitting an IPv6 packet in an Ethernet. In an embodiment, the transceiving apparatus for transmitting an IPv6 packet in an Ethernet includes an encapsulating module, a transmitting module, a receiving module and a de-encapsulating module. The encapsulating module is adapted to encapsulate an IPv6 packet and a Frame Check Sequence (FCS) to form an Ethernet frame, the transmitting module is adapted to transmit the Ethernet frame having been encapsulated by the encapsulating module, the receiving module is adapted to receive the Ethernet frame formed by encapsulating the IPv6 packet and the Frame Check Sequence (FCS), and the de-encapsulating module is adapted to de-encapsulate the Ethernet frame received by the receiving module to obtain the IPv6 packet. It shall be noted that the receiving module typically receives an IPv6 packet transmitted from another apparatus. Furthermore, the transceiving apparatus for transmitting an IPv6 packet in an Ethernet is a network device having the Layer 2 or higher-layer functions, for example, a switch and a router, etc. Another embodiment of the invention is substantially the same as the previous embodiment except that: an encapsulating module is adapted to encapsulate an IPv6 packet, a Frame Check Sequence (FCS), a preamble and a Start Frame Delimiter (SFD) to form an Ethernet frame, and meanwhile a de-encapsulating module has the ability to de-encapsulate the frame to obtain the IPv6 packet. Functions of the respective modules in this embodiment are substantially the same as those of the modules in the system for transmitting an IPv6 packet in an Ethernet according to the invention, and therefore are not described in detail again.

The invention further provides a transmitting apparatus for transmitting an IPv6 packet in an Ethernet. In an embodiment, the transmitting apparatus for transmitting an IPv6 packet in an Ethernet includes an encapsulating module and a transmitting module. Specifically, the encapsulating module is adapted to encapsulate an IPv6 packet and a Frame Check Sequence (FCS) to form an Ethernet frame, and the transmitting module is adapted to transmit the Ethernet frame having been encapsulated by the encapsulating module. In another embodiment, the transmitting apparatus for transmitting an IPv6 packet in an Ethernet also includes an encapsulating module and a transmitting module, and it differs from the previous embodiment in that: the encapsulating module is adapted to encapsulate an IPv6 packet, a Frame Check Sequence (FCS), a preamble and a Start Frame Delimiter (SFD) to form an Ethernet frame, i.e. the encapsulating module additionally encapsulates the Frame Check Sequence (FCS) and the preamble if compared with the previous embodiment; and the transmitting module is adapted to transmit the Ethernet frame having been encapsulated by the encapsulating module. Functions of the respective modules in this embodiment are substantially the same as those of the modules in the system for transmitting an IPv6 packet in an Ethernet according to the invention, and therefore are not described in detail again.

The invention further provides a receiving apparatus for transmitting an IPv6 packet in an Ethernet. In an embodiment, the receiving apparatus for transmitting an IPv6 packet in an Ethernet includes a receiving module and a de-encapsulating module. Specifically, the receiving module is adapted to receive an Ethernet frame formed by encapsulating an IPv6 packet and a Frame Check Sequence (FCS), and the de-encapsulating module is adapted to de-encapsulate the Ethernet frame received by the receiving module to obtain the IPv6 packet. In another embodiment, the receiving module of the receiving apparatus for transmitting an IPv6 packet in an Ethernet is adapted to receive an Ethernet frame formed by encapsulating an IPv6 packet, a Frame Check Sequence (FCS), a preamble and a Start Frame Delimiter (SFD), and the de-encapsulating module is adapted to de-encapsulate the Ethernet frame formed by encapsulating the IPv6 packet, the Frame Check Sequence (FCS), the preamble and the Start Frame Delimiter (SFD) to obtain the IPv6 packet. Functions of the respective modules in this embodiment are substantially the same as those of the modules in the system for transmitting an IPv6 packet in an Ethernet according to the invention, and therefore are not described in detail again.

Those skilled in the art can understand that all or part of the modules or the respective steps in the above embodiments can be implemented by a program instructing corresponding hardware, and the program may be stored in a computer readable storage medium, such as an ROM/RAM, a magnetic disk and an optical disk, etc. Alternatively, they can be respectively fabricated into individual integrated circuit modules, or a plurality of modules or steps of them can be fabricated into a signal integrated circuit module. Accordingly, the invention is not limited to any specific combination of hardware and software.

To sum up, in the technical solutions according to the embodiments of the invention, when encapsulating an IPv6 packet to form an Ethernet frame, only the IPv6 packet and a Frame Check Sequence (FCS), or a preamble, a Start Frame Delimiter (SFD), the IPv6 packet and the FCS are encapsulated to form the Ethernet frame. Non-payload information in the Ethernet frame is reduced, the consumption of time and the waste of network device resources resulted from actions for searching for a destination MAC address and the like are avoided, and the simplification of the encapsulating process makes the encapsulating process much quicker. Accordingly, when reading out and de-encapsulating such type of Ethernet frame to obtain the IPv6 packet, the payload efficiency of the Ethernet frame is higher, the reading-out device occupies less resources, and the time for de-encapsulating is shorter. Thus, the encapsulating process and the de-encapsulating process can be simplified, and the transmission efficiency of data payload can be improved.

It shall further be noted that: in order to facilitate description, the embodiments of the invention have been simplified to a certain extent, only the idea of the invention is described, and practical applications may be more complex.

Although the invention has been described through the embodiments, those ordinarily skilled in the art shall understand that a lot of modifications and variations can be made without departing from the scope of the invention, and the claims appending to the specification of the invention also encompass these modifications and variations.

## Claims

1. A method for transmitting an IPv6 packet in an Ethernet, **characterized by** comprising:
encapsulating, at a transmitting end (R1), an IPv6 packet and a Frame Check Sequence to obtain an Ethernet frame, and transmitting the Ethernet frame; and
de-encapsulating, at a receiving end (R2), the received Ethernet frame to obtain the IPv6 packet;
wherein the transmitting end (R1) and the receiving end (R2) are connected directly;
and wherein the Ethernet frame does not include the source MAC address of the transmitting end (R1) and the destination MAC address of the receiving end (R2).

2. The method according to claim 1, wherein the encapsulating the IPv6 packet and the Frame Check Sequence to obtain the Ethernet frame comprises:
encapsulating, at the IP layer, to-be-transmitted data, and adding an IPv6 packet header to form the IPv6 packet; and
adding the Frame Check Sequence to the IPv6 packet to obtain the Ethernet frame.

3. The method according to claim 1, wherein the transmitting the Ethernet frame comprises:
encoding the Ethernet frame, and mapping the encoded Ethernet frame to a Physical Coding Sub-layer of a physical layer; and
executing data transmission through other sub-layers of the physical layer.

4. The method according to claim 1 wherein the encapsulating the IPv6 packet and the Frame Check Sequence to obtain the Ethernet frame comprises:
encapsulating, at the transmitting end (R1), the IPv6 packet, the Frame Check Sequence, a preamble and a Start Frame Delimiter to obtain the Ethernet frame.

5. A system for transmitting an IPv6 packet in an Ethernet, **characterized by** comprising:
a first network device (610) comprising an encapsulating module (601) and a transmitting module (602), wherein
the encapsulating module (601) is adapted to encapsulate an IPv6 packet and a Frame Check Sequence to obtain an Ethernet frame, and
the transmitting module (602) is adapted to transmit the Ethernet frame having been encapsulated by the encapsulating module; and
a second network device (620) comprising a receiving module (603) and a de-encapsulating module (604), wherein
the receiving module (603) is adapted to receive the Ethernet frame transmitted from the transmitting module, and
the de-encapsulating module (604) is adapted to de-encapsulate the Ethernet frame to obtain the IPv6 packet;
wherein the first network device (610) and the second network device (620) are connected directly;
and wherein the Ethernet frame does not include the source MAC address of the transmitting end (R1) and the destination MAC address of the receiving end (R2).

6. The system according to claim 5, wherein a preamble and a Start Frame Delimiter are further encapsulated in the Ethernet frame.

7. A transmitting apparatus for transmitting an IPv6 packet in an Ethernet, **characterized by** comprising:
an encapsulating module (601), adapted to encapsulate an IPv6 packet and a Frame Check Sequence to obtain an Ethernet frame; and
a transmitting module (602), adapted to transmit the Ethernet frame having been encapsulated by the encapsulating module;
wherein the transmitting apparatus is directly connected with a receiving apparatus;
wherein the Ethernet frame does not include the source MAC address of the transmitting apparatus and the destination MAC address of the receiving apparatus.

8. The transmitting apparatus according to claim 7, wherein a preamble and a Start Frame Delimiter are further encapsulated in the Ethernet frame.

9. A receiving apparatus for transmitting an IPv6 packet in an Ethernet, **characterized by** comprising:
a receiving module (603), adapted to receive an Ethernet frame obtained by encapsulating an IPv6 packet and a Frame Check Sequence; and
a de-encapsulating module (604), adapted to de-encapsulate the Ethernet frame received by the receiving module to obtain the IPv6 packet;
wherein the receiving apparatus is directly connected with a transmitting apparatus;
wherein the Ethernet frame does not include the source MAC address of the transmitting apparatus and the destination MAC address of the receiving apparatus.

## Patentansprüche

1. Verfahren zum Übertragen eines IPv6-Pakets in einem Ethernet, **dadurch gekennzeichnet, dass** es Folgendes umfasst:
Kapseln eines IPv6-Pakets und einer Blockprüfzeichenfolge an einem übertragenden Ende (R1), um einen Ethernet-Datablock zu erhalten, und Übertragen des Ethernet-Datenblocks; und
Entkapseln des empfangenen Ethernet-Datenblocks an einem empfangenden Ende (R2), um das IPv6-Paket zu erhalten;
wobei das übertragende Ende (R1) und das empfangende Ende (R2) direkt verbunden sind;
und wobei der Ethernet-Datenblock nicht die MAC-Quelladresse des übertragenden Endes (R1) und die MAC-Zieladresse des empfangenden Endes (R2) enthält.

2. Verfahren nach Anspruch 1, wobei das Kapseln des IPv6-Pakets und der Blockprüfzeichenfolge zum Erhalten des Ethernet-Datenblocks Folgendes umfasst:
Kapseln von zu übertragenden Daten an der IP-Layer und Hinzufügen eines IPv6-Paket-Headers zum Ausbilden des IPv6-Pakets und
Hinzufügen der Blockprüfzeichenfolge zu dem IPv6-Paket, um den Ethernet-Datenblock zu erhalten.

3. Verfahren nach Anspruch 1, wobei das Übertragen des Ethernet-Datenblocks Folgendes umfasst:
Codieren des Ethernet-Datenblocks und Abbilden des codierten Ethernet-Datenblocks auf eine Physical Coding Sublayer eine physikalische Layer; und
Ausführen einer Datenübertragung durch andere Sublayers des physikalischen Layer.

4. Verfahren nach Anspruch 1, wobei das Kapseln des IPv6-Pakets und der Blockprüfzeichenfolge, um den Ethernet-Datenblock zu erhalten, Folgendes umfasst:
Kapseln des IPv6-Pakets, der Blockprüfzeichenfolge, einer Präambel und eines Start Frame Delimiter an dem übertragenden Ende (R1), um den Ethernet-Datenblock zu erhalten.

5. System zum Übertragen eines IPv6-Pakets in einem Ethernet, **dadurch gekennzeichnet, dass** es Folgendes umfasst:
eine erste Netzwerkeinrichtung (610), umfassend ein Kapselungsmodul (601) und ein Übertragungsmodul (602), wobei
das Kapselungsmodul (601) ausgelegt ist zum Kapseln eines IPv6-Pakets und einer Blockprüfzeichenfolge, um einen Ethernet-Datenblock zu erhalten, und
wobei das Übertragungsmodul (602) ausgelegt ist zum Übertragen des von dem Kapselungsmodul gekapselten Ethernet-Datenblocks; und
eine zweite Netzwerkeinrichtung (620), umfassend ein Empfangsmodul (603) und ein Entkapselungsmodul (604), wobei
das Empfangsmodul (603) ausgelegt ist zum Empfangen des von dem Übertragungsmodul übertragenen Ethernet-Datenblocks und
das Entkapselungsmodul (604) ausgelegt ist zum Entkapseln des Ethemet-Datenblocks, um das IPv6-Paket zu erhalten;
wobei die erste Netzwerkeinrichtung (610) und die zweite Netzwerkeinrichtung (620) direkt verbunden sind;
und wobei der Ethernet-Datenblock nicht die MAC-Quelladresse des übertragenden Endes (R1) und die MAC-Zieladresse des empfangenden Endes (R2) enthält.

6. System nach Anspruch 5, wobei eine Präambel und ein Start Frame Delimiter weiter in dem Ethernet-Datenblock gekapselt werden.

7. Übertragungsvorrichtung zum Übertragen eines IPv6-Pakets in einem Ethernet, **dadurch gekennzeichnet, dass** sie Folgendes umfasst:
ein Kapselungsmodul (601), ausgelegt zum Kapseln eines IPv6-Pakets und einer Blockprüfzeichenfolge, um einen Ethernet-Datenblock zu erhalten; und
ein Übertragungsmodul (602), ausgelegt zum Übertragen des von dem Kapselungsmodul gekapselten Ethernet-Datenblocks;
wobei die Übertragungsvorrichtung direkt mit einer Empfangsvorrichtung verbunden ist;
wobei der Ethernet-Datenblock nicht die MAC-Quelladresse der Übertragungsvorrichtung und die MAC-Zieladresse der Empfangsvorrichtung enthält.

8. Übertragungsvorrichtung nach Anspruch 7, wobei eine Präambel und ein Start Frame Delimiter weiter in dem Ethernet-Datenblock gekapselt werden.

9. Empfangsvorrichtung zum Übertragen eines IPv6-Pakets in einem Ethernet, **dadurch gekennzeichnet, dass** sie Folgendes umfasst:
ein Empfangsmodul (603), ausgelegt zum Empfangen eines durch Kapseln eines IPv6-Pakets und einer Blockprüfzeichenfolge erhaltenen Ethernet-Datenblocks; und
ein Entkapselungsmodul (604), ausgelegt zum Entkapseln des von dem Empfangsmodul empfangenen Ethernet-Datenblocks, um das IPv6-Paket zu erhalten;
wobei die Empfangsvorrichtung direkt mit einer Übertragungsvorrichtung verbunden ist;
wobei der Ethernet-Datenblock nicht die MAC-Quelladresse der Übertragungsvorrichtung und die MAC-Zieladresse der Empfangsvorrichtung enthält.

## Revendications

1. Procédé pour transmettre un paquet IPv6 sur un réseau Ethernet, **caractérisé en ce qu'**il consiste à :
encapsuler, à une extrémité de transmission (R1), un paquet IPv6 et une Séquence de Vérification de Trame pour obtenir une trame Ethernet, et transmettre la trame Ethernet ; et
désencapsuler, à une extrémité de réception (R2), la trame Ethernet reçue pour obtenir le paquet IPv6 ;
dans lequel l'extrémité de transmission (R1) et l'extrémité de réception (R2) sont directement connectées ;
et dans lequel la trame Ethernet ne contient pas l'adresse MAC de source de l'extrémité de transmission (R1) et l'adresse MAC de destination de l'extrémité de réception (R2).

2. Procédé selon la revendication 1, dans lequel l'encapsulation du paquet IPv6 et de la Séquence de Vérification de Trame pour obtenir la trame Ethernet consiste à :
encapsuler, au niveau de la couche IP, des données à transmettre, et ajouter un en-tête de paquet IPv6 pour former le paquet IPv6 ; et
ajouter la Séquence de Vérification de Trame au paquet IPv6 pour obtenir la trame Ethernet.

3. Procédé selon la revendication 1, dans lequel la transmission de la trame Ethernet consiste à :
coder la trame Ethernet et mettre en correspondance la trame Ethernet codée avec une Sous-couche de Codage Physique d'une couche physique ; et
exécuter une transmission de données par l'intermédiaire d'autres sous-couches de la couche physique.

4. Procédé selon la revendication 1, dans lequel l'encapsulation du paquet IPv6 et de la Séquence de Vérification de Trame pour obtenir la trame Ethernet consiste à :
encapsuler, à l'extrémité de transmission (R1), le paquet IPv6, la Séquence de Vérification de Trame, un préambule et un Délimiteur de Trame de Début pour obtenir la trame Ethernet.

5. Système pour transmettre un paquet IPv6 sur un réseau Ethernet, **caractérisé par le fait qu'**il comprend :
un premier dispositif de réseau (610) comprenant un module d'encapsulation (601) et un module de transmission (602),
dans lequel le module d'encapsulation (601) est apte à encapsuler un paquet IPv6 et une Séquence de Vérification de Trame pour obtenir une trame Ethernet, et
le module de transmission (602) est apte à transmettre la trame Ethernet ayant été encapsulée par le module d'encapsulation ; et
un second dispositif de réseau (620) comprenant un module de réception (603) et un module de désencapsulation (604), dans lequel
le module de réception (603) est apte à recevoir la trame Ethernet transmise par le module de transmission, et
le module de désencapsulation (604) est apte à désencapsuler la trame Ethernet pour obtenir le paquet IPv6 ;
dans lequel le premier dispositif de réseau (610) et le second dispositif de réseau (620) sont directement connectés ;
et dans lequel la trame Ethernet ne contient pas l'adresse MAC de source de l'extrémité de transmission (R1) et l'adresse MAC de destination de l'extrémité de réception (R2).

6. Système selon la revendication 5, dans lequel un préambule et un Délimiteur de Trame de Début sont en outre encapsulés dans la trame Ethernet.

7. Appareil de transmission pour transmettre un paquet IPv6 sur un réseau Ethernet, **caractérisé par le fait qu'**il comprend :
un module d'encapsulation (601), apte à encapsuler un paquet IPv6 et une Séquence de Vérification de Trame pour obtenir une trame Ethernet ; et
un module de transmission (602), apte à transmettre la trame Ethernet ayant été encapsulée par le module d'encapsulation ;
dans lequel l'appareil de transmission est directement connecté à un appareil de réception ;
dans lequel la trame Ethernet ne contient pas l'adresse MAC de source de l'appareil de transmission et l'adresse MAC de destination de l'appareil de réception.

8. Appareil de transmission selon la revendication 7, dans lequel un préambule et un Délimiteur de Trame de Début sont en outre encapsulés dans la trame Ethernet.

9. Appareil de réception pour transmettre un paquet IPv6 sur un réseau Ethernet, **caractérisé en ce qu'**il comprend :
un module de réception (603), apte à recevoir une trame Ethernet obtenue en encapsulant un paquet IPv6 et une Séquence de Vérification de Trame ; et
un module de désencapsulation (604), apte à désencapsuler la trame Ethernet reçue par le module de réception afin d'obtenir le paquet IPv6 ;
dans lequel l'appareil de réception est directement connecté à un appareil de transmission ;
dans lequel la trame Ethernet ne contient pas l'adresse MAC de source de l'appareil de transmission et l'adresse MAC de destination de l'appareil de réception.
